# EUROPEAN PATENT APPLICATION

(11) **EP 4 395 081 A1**
(43) Date of publication of application: **03.07.2024**
(21) Application number: 23762731.0
(22) Date of filing: 14.02.2023
(51) Int. Cl.: H01R 13/52, H01R 13/46, H01M 50/502, H01M 10/48

(54) **ELECTRICAL CONNECTOR, SAMPLING ASSEMBLY, BATTERY, AND ELECTRIC DEVICE**

(30) Priority: 02.03.2022 CN 202210204245
(71) Applicant: Contemporary Amperex Technology Co., Limited, Ningde, Fujian 352100 (CN)
(72) Inventor: GAN, Weifeng, Ningde, Fujian 352100 (CN); WANG, Yu, Ningde, Fujian 352100 (CN); WANG, Chong, Ningde, Fujian 352100 (CN); CHEN, Zhiming, Ningde, Fujian 352100 (CN); ZHENG, Chenling, Ningde, Fujian 352100 (CN)
(74) Representative: Behr, Wolfgang
(86) International application number: PCT/CN2023/075998
(87) International publication number: WO 2023/165330

(57) **Abstract**

This disclosure provides an electrical connector, a sampling assembly, a battery, and an electric device. The electrical connector includes: a housing; a first electrical connection portion located in the housing and including a first connection end and a second connection end electrically connected to the first connection end; a second electrical connection portion located in the housing and including a third connection end and a fourth connection end electrically connected to the third connection end; and a separation portion used for blocking water droplets and located in the housing and between the first electrical connection portion and the second electrical connection portion. The electrical connector in this disclosure is conducive to reducing the risk of connection between the first electrical connection portion and the second electrical connection portion due to condensed water.

## Description

### CROSS-REFERENCE TO RELATED APPLICATIONS

This application claims priority to Chinese Patent Application No. 202210204245.0, filed on March 02, 2022 and entitled "ELECTRICAL CONNECTOR, SAMPLING ASSEMBLY, BATTERY, AND ELECTRIC DEVICE", which is incorporated herein by reference in its entirety.

### TECHNICAL FIELD

This disclosure relates to the field of battery technologies, and in particular, to an electrical connector, a sampling assembly, a battery, and an electric device.

### BACKGROUND

For a battery in the related art, to achieve a detachable connection between a sampling member and circuit board of a sampling assembly in the battery for ease of maintenance of the sampling assembly, the sampling member and the circuit board can be electrically connected via an electrical connector. When the sampling assembly in the related art is used in a high-temperature and high-humidity environment, condensed water is easily generated in the electrical connector, and water droplets of the condensed water may lead to connection between connection terminals without electrical connection in the electrical connector, affecting the sampling performance of the sampling assembly.

### SUMMARY

This disclosure is intended to provide an electrical connector, a sampling assembly, a battery, and an electric device, so as to reduce the risk of connection between connection terminals without electrical connection in the electrical connector due to condensed water.

A first aspect of this disclosure provides an electrical connector including a housing, a first electrical connection portion, a second electrical connection portion, and a separation portion. The first electrical connection portion is located in the housing and includes a first connection end and a second connection end electrically connected to the first connection end. The second electrical connection portion is located in the housing and includes a third connection end and a fourth connection end electrically connected to the third connection end. The separation portion is configured to block water droplets and is located in the housing and between the first electrical connection portion and the second electrical connection portion.

The separation portion is disposed between the first electrical connection portion and the second electrical connection portion, and the separation portion can form a barrier between the first electrical connection portion and the second electrical connection portion. In this way, when condensed water is formed inside the housing of the electrical connector, it helps to separate the first electrical connection portion and its connection end from the second electrical connection portion and its connection end, making the condensed water be less likely to come into contact with both the first electrical connection portion and the second electrical connection portion, thereby helping to reduce the risk of connection between the first electrical connection portion and the second electrical connection portion due to the condensed water.

In the electrical connector according to some embodiments, the separation portion includes the first end and a second end opposite each other. The first connection end of the first electrical connection portion is closer to the first end of the separation portion than the second connection end, and the second connection end of the first electrical connection portion is closer to the second end of the separation portion than the first connection end. The third connection end of the second electrical connection portion is closer to the first end of the separation portion than the fourth connection end, and the fourth connection end of the second electrical connection portion is closer to the second end of the separation portion than the third connection end. A distance between the first connection end and the second end is smaller than a distance between the third connection end and the second end, and a distance between the second connection end and the first end is smaller than a distance between the fourth connection end and the first end.

The above arrangement helps to form a staggered arrangement of the connection end of the first electrical connection portion and the connection end of the second electrical connection portion which are disposed at a same end of the housing, thereby helping to increase a distance between the connection ends, close to a same end, of the first electrical connection portion and the second electrical connection portion. With the provision of the separation portion, it can further lengthen a flow path of the condensed water, better preventing the connection between the first electrical connection portion and the second electrical connection portion due to the condensed water. When the electrical connector is configured to connect corresponding sampling connection portions of the sampling portion and circuit board of the sampling assembly, it helps to improve the sampling performance of the sampling assembly.

In the electrical connector according to some embodiments, the first electrical connection portion, the second electrical connection portion, and the separation portion all extend along a length direction of the housing.

The above arrangement is conducive to the reasonable arrangement of various portions of the electrical connector. The first electrical connection portion, the second electrical connection portion, and the separation portion are relatively long, helping to lengthen a flow path of the condensed water between the connection ends close to each other of the first electrical connection portion and the second electrical connection portion, thereby better preventing the connection between the first electrical connection portion and the second electrical connection portion due to the condensed water.

In the electrical connector according to some embodiments, the first electrical connection portion, the second electrical connection portion, and the separation portion are spaced apart in parallel.

The above arrangement is conducive to the reasonable arrangement of various portions of the electrical connector. The first electrical connection portion, the second electrical connection portion, and the separation portion being spaced apart in parallel helps to reduce the probability of the connection between the first electrical connection portion and the second electrical connection portion due to the condensed water moving along the separation portion, improving the separation effect of the separation portion.

In the electrical connector according to some embodiments, the first connection end, the second connection end, the third connection end, and the fourth connection end each are a plug-fitting end or press-fitting end connected to a plug pin.

Each connection end being the plug-fitting end or press-fitting end connected to the plug pin is conducive to rapid connection and disassembly of the electrical connector and an electrical component connected to the electrical connector, which is conducive to assembly and maintenance of the electrical connector and an electrical assembly in which the electrical connector is located, for example, a sampling assembly.

In the electrical connector according to some embodiments, the housing includes a housing body and a cover. The first electrical connection portion and the second electrical connection portion are disposed on the housing body. The cover covers the housing body and is detachably connected to the housing body, and the separation portion is disposed on at least one of the housing body and the cover.

The provision of the above structures is not only conducive to processing and assembly of various parts of the electrical connector, but also conducive to improving assembly efficiency and assembly accuracy of the electrical connector.

In the electrical connector according to some embodiments, the separation portion includes a first separation bar and a second separation bar. The first separation bar is disposed on one of the housing body and the cover. The second separation bar is disposed on the other of the housing body and the cover, where an end portion of the second separation bar facing the first separation bar is in convex-concave fit with an end portion of the first separation bar facing the second separation bar.

The above arrangement allows the separation portion to better separate the first electrical connection portion from the second electrical connection portion at the housing body and the cover, helping to prevent the connection between the first electrical connection portion and the second electrical connection portion due to the condensed water flowing directly between inner walls of the housing body opposite the cover.

In the electrical connector according to some embodiments, the housing body is connected to the cover through a snap-fitting structure. Such arrangement is conducive to rapid assembly and maintenance of the electrical connector.

In the electrical connector according to some embodiments, the housing body and/or the cover is provided with through holes for connection terminals to pass through, where the connection terminals are respectively electrically connected to the first connection end, the second connection end, the third connection end, and the fourth connection end.

Such arrangement is conducive to rapid assembly and maintenance of the electrical connector and the electrical component connected to the electrical connector. In the electrical connector according to some embodiments, the housing body includes a bottom wall and a side wall disposed on the periphery of the bottom wall; the first electrical connection portion and the second electrical connection portion are both disposed on the bottom wall; and the first connection end, the second connection end, the third connection end, and the fourth connection end are apart from the side wall of the housing body.

In the electrical connector according to some embodiments, the housing body includes a bottom wall and a side wall disposed on the periphery of the bottom wall, the first electrical connection portion and the second electrical connection portion are both disposed on the bottom wall, and the first connection end, the second connection end, the third connection end, and the fourth connection end are apart from the side wall of the housing body.

Such arrangement helps to prevent the condensed water on the wall of the housing from coming into contact with various connection ends, thereby helping to reduce the risk of the connection between the first electrical connection portion and the second electrical connection portion.

In the electrical connector according to some embodiments, the housing body includes a bottom wall and a side wall disposed on the periphery of the bottom wall, and the separation portion is hermetically connected to the bottom wall of the housing body and the cover.

Such arrangement allows the separation portion to better separate the first electrical connection portion from the second electrical connection portion at the housing body and the cover, helping to prevent the connection between the first electrical connection portion and the second electrical connection portion due to the condensed water flowing directly between inner walls of the housing body opposite the cover.

In the electrical connector according to some embodiments, the separation portion includes a first end and a second end opposite each other, where a spacing is present between the first end and the side wall, and a spacing is present between the second end and the side wall.

The provision of the spacing helps the separation portion to achieve separation and maintain airflow communication between two spaces separated by the separation portion, helping various terminals of electrical components connected to the first electrical connection portion, the second electrical connection portion, and the electrical connector to be located in an approximately same operation environment.

In the electrical connector according to some embodiments, the housing body is connected to the cover through a snap-fitting structure, where the snap-fitting structure includes a first snap-fitting portion and a second snap-fitting portion. The first snap-fitting portion is disposed on the cover. The second snap-fitting portion is disposed on the bottom wall of the housing body and located in the spacing.

The second snap-fitting portion of the snap-fitting structure being located in the spacing facilitates a compact arrangement of the electrical connector.

In the electrical connector according to some embodiments, the first electrical connection portion or the second electrical connection portion includes a slot and a press-fitting portion. The slot includes an accommodating groove used for accommodating a connection terminal. The press-fitting portion is connected to an opening side of the accommodating groove in an end portion of the slot in an extension direction and includes a press-in channel communicating with an opening of the accommodating groove, where a minimum passing size of the press-in channel is smaller than an opening size of the accommodating groove on a cross section perpendicular to the extension direction of the slot.

The above arrangement helps to assemble the electrical connector and the electrical component connected to the electrical connector in a press-fitting manner, which facilitates rapid assembly and prevents a terminal of the electrical component from disengaging from the accommodating groove through the press-in channel. Such assembly manner is applicable to a circumstance in which the operation space is small and not suitable for insertion and removal of a plug pin.

In the electrical connector according to some embodiments, the size of the press-in channel gradually decreases to the minimum passing size and then gradually increases in a direction from a side away from the accommodating groove to a side close to the accommodating groove on the cross section perpendicular to the extension direction of the slot.

Such arrangement helps to assemble the electrical connector and the electrical component connected to the electrical connector in a press-fitting manner, which facilitates rapid and smooth assembly of the electrical connector and the corresponding electrical component.

In the electrical connector according to some embodiments, the housing is made of an insulating and waterproof material; and/or the separation portion is made of an insulating and waterproof material.

The above arrangement helps to better achieve insulating and waterproof effects of the electrical connector, and helps to improve the separation effect of the separation portion.

A second aspect of this disclosure provides a sampling assembly including a sampling member, a circuit board, and an electrical connector. The sampling member includes a sampling portion, a first sampling member connection terminal, and a second sampling member connection terminal, where the first sampling member connection terminal and the second sampling member connection terminal are connected to the sampling portion. The circuit board includes a circuit board body, a first circuit board connection terminal, and a second circuit board connection terminal, where the first circuit board connection terminal and the second circuit board connection terminal are connected to the circuit board body. The electrical connector is the electrical connector according to the first aspect of this disclosure. The first sampling member connection terminal is electrically connected to the first connection end of the first electrical connection portion, the second sampling member connection terminal is electrically connected to the third connection end of the second electrical connection portion, the first circuit board connection terminal is electrically connected to the second connection end of the first electrical connection portion, and the second circuit board connection terminal is electrically connected to the fourth connection end of the second electrical connection portion.

The sampling assembly in this disclosure uses the electrical connector in this disclosure. The electrical connector is provided with the separation portion, helping to reduce the risk of the connection between the first electrical connection portion and the second electrical connection portion due to the condensed water. When corresponding sampling connection portions of the sampling portion and circuit board of the sampling assembly are connected through the electrical connector, it helps to improve the sampling performance of the sampling assembly.

In the sampling assembly according to some embodiments, the first sampling member connection terminal, the second sampling member connection terminal, the first circuit board connection terminal, and the second circuit board connection terminal each include a plug pin. The first connection end, the second connection end, the third connection end, and the fourth connection end each are a plug-fitting end or press-fitting end connected to a corresponding plug pin.

Each connection end being the plug-fitting end or press-fitting end connected to the plug pin is conducive to rapid connection and disassembly of the electrical connector and the sampling portion and sampling connection portion connected to the electrical connector, which is conducive to assembly and maintenance of the electrical connector and the sampling assembly.

In the sampling assembly according to some embodiments, the separation portion includes a first end and a second end opposite each other; the first connection end of the first electrical connection portion is closer to the first end of the separation portion than the second connection end, and the second connection end of the first electrical connection portion is closer to the second end of the separation portion than the first connection end; the third connection end of the second electrical connection portion is closer to the first end of the separation portion than the fourth connection end, and the fourth connection end of the second electrical connection portion is closer to the second end of the separation portion than the third connection end; and a distance between the first connection end and the second end is smaller than a distance between the third connection end and the second end, and a distance between the second connection end and the first end is smaller than a distance between the fourth connection end and the first end.

A distance between an end surface of a plug-fitting end of a plug pin of the first sampling member connection terminal and the sampling portion is smaller than a distance between an end surface of a plug-fitting end of a plug pin of the second sampling member connection terminal and the sampling portion; and a distance between an end surface of a plug-fitting end of a plug pin of the first circuit board connection terminal and the circuit board body is greater than a distance between an end surface of a plug-fitting end of a plug pin of the second circuit board connection terminal and the circuit board body.

The above arrangement helps to form a staggered arrangement of the connection end of the first electrical connection portion and the connection end of the second electrical connection portion which are disposed at a same end of the housing, thereby helping to increase a distance between the connection ends, close to a same end, of the first electrical connection portion and the second electrical connection portion. With the provision of the separation portion, it can further lengthen a flow path of the condensed water, better preventing the connection between the first electrical connection portion and the second electrical connection portion due to the condensed water. Plug-fitting ends of plug pins of the corresponding sampling connection portions of the sampling portion and circuit board are adapted to the first electrical connection portion and the second electrical connection portion, helping to improve the sampling performance of the sampling assembly.

In the sampling assembly according to some embodiments, the first electrical connection portion and the second electrical connection portion each include a slot and two press-fitting portions disposed at two ends of the slot in an extension direction, where the slot includes an accommodating groove used for accommodating a connection terminal, the press-fitting portion is connected to an opening side of the accommodating groove in a corresponding end portion of the slot in the extension direction and includes a press-in channel communicating with an opening of the accommodating groove, and a minimum passing size of the press-in channel is smaller than an opening size of the accommodating groove on a cross section perpendicular to the extension direction of the slot.

Each of the plug pins includes a body section and a fitting section, where each fitting section fits with the corresponding accommodating groove and the press-fitting portion, and the body section is connected to the corresponding fitting section and the sampling portion or the circuit board body.

The above structural arrangement of the first electrical connection portion, the second electrical connection portion, and the plug pin facilitates rapid and stable connection between the connection end and the plug pin and prevents the plug pin from disengaging from the connection end through the press-in channel.

In the sampling assembly according to some embodiments, each of the plug pins further includes an anti-disengagement portion, where the anti-disengagement portion is disposed on the corresponding fitting section and is apart from the body section, and the press-fitting portion is located between the corresponding body section and the anti-disengagement portion.

The provision of the anti-disengagement portion helps the plug pin to disengage from the connection end along the extension direction of the accommodating groove.

A third aspect of this disclosure provides a battery including a battery cell and the sampling assembly according to the second aspect of this disclosure, where the sampling assembly is configured to acquire parameters of the battery cell.

The battery according to the embodiments of this disclosure has the advantages of the sampling assembly according to the embodiments of this disclosure, helping to improve the sampling performance of the battery, thereby facilitating safety management of the battery by a battery management system.

A fourth aspect of this disclosure provides an electric device including the battery according to the third aspect of this disclosure, where the battery is configured to supply power to the electric device.

The electric device according to the embodiments of this disclosure has the advantages of the battery according to the embodiments of this disclosure, helping to improve the sampling performance of the battery, thereby facilitating safety management of the battery by a battery management system.

Other features and advantages of this disclosure become apparent from the following detailed description of exemplary embodiments of this disclosure with reference to the accompanying drawings.

### BRIEF DESCRIPTION OF DRAWINGS

The accompanying drawings described herein are intended for better understanding of this disclosure and constitute a part of this disclosure. Illustrative embodiments and descriptions thereof in this disclosure are intended to interpret this disclosure without constituting any inappropriate limitation on this disclosure. In the accompanying drawings:
FIG. 1 is a schematic structural diagram of an electric device according to an embodiment of this disclosure.
FIG. 2 is a partial schematic structural diagram of a battery according to an embodiment of this disclosure.
FIG. 3 is a schematic structural diagram of a battery cell of a battery according to an embodiment of this disclosure.
FIG. 4 is a schematic structural diagram of a sampling assembly according to an embodiment of this disclosure.
FIG. 5 is a schematic exploded view of a connection structure for connection, via an electrical connector, between a sampling portion and circuit board of a sampling assembly according to an embodiment of this disclosure, where the circuit board shows only a connection terminal correspondingly connected to the sampling portion.
FIG. 6 is a schematic diagram of a connection structure for connection, via an electrical connector, between a sampling portion and circuit board of a sampling assembly according to an embodiment of this disclosure, where the circuit board shows only a connection terminal correspondingly connected to the sampling portion.
FIG. 7 is a partial schematic structural diagram of an electrical connector according to an embodiment of this disclosure.
FIG. 8 is an enlarged schematic structural diagram of part L in FIG. 7.
FIG. 9 is a schematic structural diagram of a sampling portion according to an embodiment of this disclosure.
FIG. 10 is a partially enlarged schematic structural diagram of FIG. 9.
FIG. 11 is a partial schematic structural diagram of an electrical connector according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some but not all embodiments of this disclosure. The following description of at least one exemplary embodiment is merely illustrative and definitely is not construed as any limitation on this disclosure or on use of this disclosure. All other embodiments obtained by persons of ordinary skill in the art based on the embodiments of this disclosure without creative efforts shall fall within the protection scope of this disclosure.

Unless otherwise specified, relative arrangements of components and steps, numerical expressions, and numerical values set forth in these embodiments do not constitute a limitation on the scope of this disclosure. Moreover, it should be understood that, for ease of description, sizes of various parts shown in the accompanying drawings are not drawn to scale. The technologies, methods, and devices known to persons of ordinary skill in the related art may not be discussed in detail, but in appropriate circumstances, the technologies, methods, and devices should be regarded as being authorized as a part of the specification. In all examples shown and discussed herein, any specified value should be interpreted as merely illustrative, rather than restrictive. Therefore, other examples of the exemplary embodiments may have different values. It should be noted that similar reference signs and letters indicate similar items in the following accompanying drawings, and therefore once an item is defined in one accompanying drawing, it does not need to be further discussed in the subsequent accompanying drawings.

In the description of this disclosure, it should be understood that the words "first" and "second" are used to define parts only for the convenience of distinguishing the corresponding parts. Unless otherwise stated, the above words have no special meaning, so they cannot be construed as any limitations on the protection scope of this disclosure.

In the description of this disclosure, it should be noted that the orientations or positional relationships indicated by the orientation words "front", "rear", "upper", "lower", "left", "right", "transverse", "vertical", "perpendicular", "horizontal", "top", "bottom", and the like are typically based on the orientations or positional relationships as shown in the accompanying drawings. These orientation words are merely for ease and brevity of the description of this disclosure rather than indicating or implying that the apparatuses or components mentioned must have specific orientations, or must be constructed or manipulated according to specific orientations unless stated in contrary, and therefore shall not be construed as any limitations on the protection scope of this disclosure. The orientation words "inside" and "outside" refer to the inside and outside relative to the outline of each component itself.

For a battery in the related art, a sampling member and circuit board of a sampling assembly are electrically connected through an electrical connector.

During implementation of this application, the inventors have found that if a battery operates in a high-temperature and high-humidity environment, condensed water droplets may be generated in a housing body of an electrical connector, and the condensed water droplets may lead to connection between connection terminals without electrical connection in the housing body of the electrical connector, resulting in sampling failure.

To solve the foregoing technical problem, embodiments of this application provide an electrical connector helping to reduce the risk of connection between connection ends without electrical connection due to condensed water, and further provide a sampling assembly including such electrical connector, a battery using such sampling assembly, and an electric device powered by such battery.

The electric device according to the embodiments of this disclosure includes the battery according to the embodiments of this disclosure, where the battery is configured to supply power to the electric device. The battery according to the embodiments of this disclosure includes the sampling assembly according to the embodiments of this disclosure. The sampling assembly according to the embodiments of this disclosure includes the electrical connector according to the embodiments of this disclosure.

The electric device may be a mobile phone, a portable device, a notebook computer, an electric bicycle, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

The battery according to the embodiments of this disclosure is a single physical module that includes one or more battery cells for providing a higher voltage and capacity. For example, the battery may include a battery module, a battery pack, or the like. A battery typically includes a box configured to enclose one or more battery cells. The box can prevent liquids or other foreign matter from affecting charging or discharging of the battery cell.

A battery includes three levels: a battery cell, a battery module, and a battery pack. The battery cell refers to a smallest unit that constitutes the battery module or the battery pack.

A plurality of battery cells can be connected in series and/or in parallel through electrode terminals for various application scenarios, for example, some high-power application scenarios such as an electric vehicle.

The battery module is formed by electrically connecting a specified quantity of battery cells and putting the battery cells into a frame to protect the battery cells from external impact, heat, vibration, and the like. With the development of technologies, the battery module may be omitted, that is, the battery pack is directly formed using battery cells.

The battery pack is a final state of a battery system assembled in a high-power electric device such as an electric vehicle. A battery pack typically includes a box configured to enclose one or more battery cells. The box can prevent liquids or other foreign matter from affecting charging or discharging of the battery cell. The box typically consists of a cover and a box shell. Most existing battery packs are formed by assembling various control and protection systems such as a battery management system (Battery Management System, BMS) and a thermal management component on one or more battery modules. With such improvement, weight energy density and volumetric energy density of the battery system are improved, and the number of parts is significantly reduced.

The battery mentioned in the embodiments of this disclosure includes a battery cell, a battery module, or a battery pack.

In the embodiments of this disclosure, the battery cell may include a lithium-ion battery, a lithium-sulfur battery, a sodium-lithium-ion battery, a sodium-ion battery, a magnesium-ion battery, or the like. This is not limited in the embodiments of this disclosure. The battery cell may be cylindrical, flat, cuboid, or of other shapes, which is not limited in the embodiments of this disclosure either. Battery cells are typically divided into three types by packaging method: cylindrical cell, prismatic cell, and pouch cell, which is not limited in the embodiments of this disclosure either.

The battery cell mainly includes a cell assembly, an enclosure, and an end cover assembly, where the cell assembly is packaged in the enclosure through an end cover of the end cover assembly.

The sampling assembly is coupled to the battery management system for acquiring operation data of the battery, and the sampling assembly typically includes a circuit board and a sampling member in signal connection with the circuit board. The sampling member is configured to acquire the operation data of the battery, such as temperature and pressure. The circuit board is in signal connection with the sampling member for receiving the operation data acquired by the sampling member and is in signal connection with the battery management system for uploading the operation data of the battery to the battery management system. The sampling member and circuit board according to the embodiments of this disclosure are in signal connection with each other through the electrical connector according to the embodiments of this disclosure. The sampling member may be, for example, a temperature sensor or a pressure sensor. The circuit board is, for example, a flexible printed circuit board (flexible printed circuit, FPC). Specific forms of the sampling member and circuit board are not limited in this disclosure.

An electrical connector is an electromechanical component for connecting electrical circuits. The electrical connector according to the embodiments of this disclosure is mainly used in the sampling assembly of the battery for connecting the sampling member to the circuit board. In embodiments not shown in the figures, the electrical connector according to the embodiments of this disclosure may alternatively be used in electrical circuits for electrically connecting different electrical components. Application scenarios of the electrical connector are not limited in this disclosure.

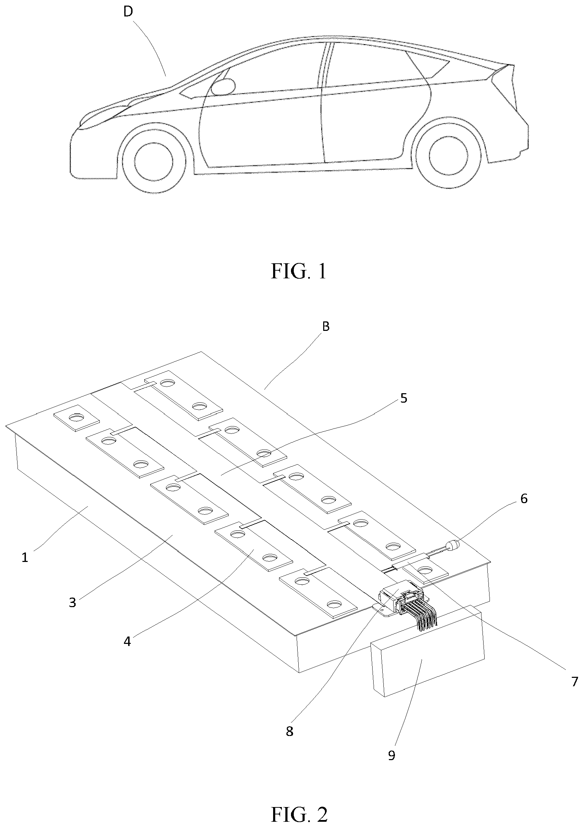

As shown in FIG. 2 and FIGs. 4 to 11, an electrical connector 7 provided in an embodiment of this disclosure includes a housing, a first electrical connection portion 73, a second electrical connection portion 74, and a separation portion 75. The first electrical connection portion 73 is located in the housing and includes a first connection end 73A and a second connection end 73B electrically connected to the first connection end 73A. The second electrical connection portion 74 is located in the housing and includes a third connection end 74A and a fourth connection end 74B electrically connected to the third connection end 74A. The separation portion 75 is configured to block water droplets and is located in the housing and between the first electrical connection portion 73 and second electrical connection portion 74.

The separation portion 75 is disposed between the first electrical connection portion 73 and the second electrical connection portion 74, and the separation portion 75 can form a barrier between the first electrical connection portion 73 and the second electrical connection portion 74. In this way, when condensed water is formed inside the housing of the electrical connector 7, it helps to separate the first electrical connection portion 73 and its connection end from the second electrical connection portion 74 and its connection end, making the condensed water be less likely to come into contact with both the first electrical connection portion 73 and the second electrical connection portion 74, thereby helping to reduce the risk of connection between the first electrical connection portion 73 and the second electrical connection portion 74 due to the condensed water.

When the electrical connector is connected to corresponding sampling connection portions of the sampling portion and circuit board of the sampling assembly, it helps to improve the sampling performance of the sampling assembly.

The separation portion 75 is configured to prevent at least one of the first connection end 73A and the second connection end 73B from being connected to at least one of the third connection end 74A and the fourth connection end 74B through condensed water in the housing. The separation portion 75 can entirely separate the first electrical connection portion 73 from the second electrical connection portion 74 or partially separate the first electrical connection portion 73 from the second electrical connection portion 74. The separation effect of the separation portion 75 can be realized as long as it makes water droplets be less likely to cause electrical connection between any connection end of the first electrical connection portion 73 and any connection end of the second electrical connection portion 74.

In the electrical connector 7 according to some embodiments, the separation portion 75 includes a first end 75A and a second end 75B opposite each other. The first connection end 73A of the first electrical connection portion 73 is closer to the first end 75A of the separation portion 75 than the second connection end 73B, and the second connection end 73B of the first electrical connection portion 73 is closer to the second end 75B of the separation portion 75 than the first connection end 73A. The third connection end 74A of the second electrical connection portion 74 is closer to the first end 75A of the separation portion 75 than the fourth connection end 74B, and the fourth connection end 74B of the second electrical connection portion 74 is closer to the second end 75B of the separation portion 75 than the third connection end 74A. A distance between the first connection end 73A and the second end 75B is smaller than a distance between the third connection end 74A and the second end 75B, and a distance between the second connection end 73B and the first end 75A is smaller than a distance between the fourth connection end 74B and the first end 75A.

The above arrangement helps to form a staggered arrangement of the connection end of the first electrical connection portion 73 and the connection end of the second electrical connection portion 74 which are disposed at a same end of the housing, thereby helping to increase a distance between the connection ends, close to a same end, of the first electrical connection portion 73 and the second electrical connection portion 74. With the provision of the separation portion 75, it can further lengthen a flow path of the condensed water, better preventing the connection between the first electrical connection portion 73 and the second electrical connection portion 74 due to the condensed water. When the electrical connector is configured to connect corresponding sampling connection portions of the sampling portion and circuit board of the sampling assembly, it helps to improve the sampling performance of the sampling assembly.

In the electrical connector 7 according to some embodiments, the first electrical connection portion 73, the second electrical connection portion 74, and the separation portion 75 all extend along a length direction of the housing.

The above arrangement is conducive to the reasonable arrangement of various portions of the electrical connector 7. The first electrical connection portion 73, the second electrical connection portion 74, and the separation portion 75 are relatively long, helping to lengthen a flow path of the condensed water between the connection ends close to each other of the first electrical connection portion 73 and the second electrical connection portion 74, thereby better preventing the connection between the first electrical connection portion 73 and the second electrical connection portion 74 due to the condensed water.

In the electrical connector 7 according to some embodiments, the first electrical connection portion 73, the second electrical connection portion 74, and the separation portion 75 are spaced apart in parallel.

The above arrangement is conducive to the reasonable arrangement of various portions of the electrical connector 7. The first electrical connection portion 73, the second electrical connection portion 74, and the separation portion 75 being spaced apart in parallel helps to reduce the probability of the connection between the first electrical connection portion 73 and the second electrical connection portion 74 due to the condensed water moving along the separation portion 75, improving the separation effect of the separation portion 75.

In the electrical connector 7 according to some embodiments, the first connection end 73A, the second connection end 73B, the third connection end 74A, and the fourth connection end 74B each are a plug-fitting end or press-fitting end connected to a plug pin.

Each connection end being the plug-fitting end or press-fitting end connected to the plug pin is conducive to rapid connection and disassembly of the electrical connector 7 and an electrical component connected to the electrical connector, which is conducive to assembly and maintenance of the electrical connector 7 and an electrical assembly in which the electrical connector 7 is located, for example, a sampling assembly.

In the electrical connector 7 according to some embodiments, the housing includes a housing body 71 and a cover 72. The first electrical connection portion 73 and the second electrical connection portion 74 are disposed on the housing body 71. The cover 72 covers the housing body 71 and is detachably connected to the housing body 71, and the separation portion 75 is disposed on at least one of the housing body 71 and the cover 72.

The housing includes the housing body 71 and the cover 72, the first electrical connection portion 73 and the second electrical connection portion 74 are disposed on the housing body 71, and the separation portion 75 is disposed on the housing body 71 and/or the cover 72. This is conducive to processing and assembly of various parts of the electrical connector 7 and improving assembly efficiency and assembly accuracy of the electrical connector 7.

In the electrical connector 7 according to some embodiments, the separation portion 75 includes a first separation bar 751 and a second separation bar 752. The first separation bar 751 is disposed on one of the housing body 71 and the cover 72. The second separation bar 752 is disposed on the other of the housing body 71 and the cover 72, where an end portion of the second separation bar 752 facing the first separation bar 751 is in convex-concave fit with an end portion of the first separation bar 751 facing the second separation bar 752.

Such arrangement allows the separation portion 75 to better separate the first electrical connection portion 73 from the second electrical connection portion 74 at the housing body 71 and the cover 72, helping to prevent the connection between the first electrical connection portion 73 and the second electrical connection portion 74 due to the condensed water flowing directly between inner walls of the housing body 71 opposite the cover 72.

In the electrical connector 7 according to some embodiments, the housing body 71 is connected to the cover 72 through a snap-fitting structure.

Such arrangement is conducive to rapid assembly and maintenance of the electrical connector 7.

In the electrical connector 7 according to some embodiments, the housing body 71 and/or the cover 72 is provided with through holes 711A, 711B, 711C, and 711D for connection terminals to pass through, where the connection terminals are respectively electrically connected to the first connection end 73A, the second connection end 73B, the third connection end 74A, and the fourth connection end 74B.

Such arrangement is conducive to rapid assembly and maintenance of the electrical connector 7 and the electrical component connected to the electrical connector 7. In the electrical connector 7 according to some embodiments, the housing body 71 includes a bottom wall 711 and a side wall 712 disposed on the periphery of the bottom wall 711, the first electrical connection portion 73 and the second electrical connection portion 74 are both disposed on the bottom wall 711, and the first connection end 73A, the second connection end 73B, the third connection end 74A, and the fourth connection end 74B are apart from the side wall 712 of the housing body 71.

Such arrangement helps to prevent the condensed water on the wall of the housing from coming into contact with various connection ends, thereby helping to reduce the risk of the connection between the first electrical connection portion 73 and the second electrical connection portion 74.

In the electrical connector 7 according to some embodiments, the housing body 71 includes a bottom wall 711 and a side wall 712 disposed on the periphery of the bottom wall 711, and the separation portion 75 is hermetically connected to the bottom wall 711 of the housing body 71 and the cover 72.

Such arrangement allows the separation portion 75 to better separate the first electrical connection portion 73 from the second electrical connection portion 74 at the housing body 71 and the cover 72, helping to prevent the connection between the first electrical connection portion 73 and the second electrical connection portion 74 due to the condensed water flowing directly between inner walls of the housing body 71 opposite the cover 72.

In the electrical connector 7 according to some embodiments, the separation portion 75 includes a first end 75A and a second end 75B opposite each other, where a spacing is present between the first end 75A and the side wall 712, and a spacing is present between the second end 75B and the side wall 712.

The provision of the spacing helps the separation portion 75 to achieve separation and maintain airflow communication between two spaces separated by the separation portion, helping various terminals of electrical components connected to the first electrical connection portion 73, the second electrical connection portion 74, and the electrical connector to be located in an approximately same operation environment.

In the electrical connector 7 according to some embodiments, the housing body 71 is connected to the cover 72 through a snap-fitting structure, where the snap-fitting structure includes a first snap-fitting portion and a second snap-fitting portion. The first snap-fitting portion is disposed on the cover 72. The second snap-fitting portion is disposed on the bottom wall 711 of the housing body 71 and located in the spacing.

The second snap-fitting portion of the snap-fitting structure being located in the spacing facilitates a compact arrangement of the electrical connector 7.

In the electrical connector 7 according to some embodiments, the first electrical connection portion 73 or the second electrical connection portion 74 includes a slot 731 and a press-fitting portion 732. The slot 731 includes an accommodating groove 731A used for accommodating a connection terminal. The press-fitting portion 732 is connected to an opening side of the accommodating groove 731A in an end portion of the slot 731 in an extension direction and includes a press-in channel 732A communicating with an opening of the accommodating groove 731A, where a minimum passing size of the press-in channel 732A is smaller than an opening size of the accommodating groove 731A on a cross section perpendicular to the extension direction of the slot 731.

The above arrangement helps to assemble the electrical connector 7 and the electrical component connected to the electrical connector 7 in a press-fitting manner, which facilitates rapid assembly and prevents a terminal of the electrical component from disengaging from the accommodating groove 731A through the press-in channel. Such assembly manner is applicable to a circumstance in which the operation space is small and not suitable for insertion and removal of a plug pin.

In the electrical connector 7 according to some embodiments, the size of the press-in channel 732A gradually decreases to the minimum passing size and then gradually increases in a direction from a side away from the accommodating groove 731A to a side close to the accommodating groove 731A on the cross section perpendicular to the extension direction of the slot 731.

Such arrangement helps to assemble the electrical connector 7 and the electrical component connected to the electrical connector 7 in a press-fitting manner, which facilitates rapid and smooth assembly of the electrical connector 7 and the corresponding electrical component.

In the electrical connector 7 according to some embodiments, the housing is made of an insulating and waterproof material; and/or the separation portion is made of an insulating and waterproof material. The above arrangement helps to better achieve insulating and waterproof effects of the electrical connector 7, and helps to improve the separation effect of the separation portion.

A sampling assembly according to an embodiment of this disclosure includes a sampling member 6, a circuit board 5, and an electrical connector 7. The sampling member 6 includes a sampling portion 61, a first sampling member connection terminal 62, and a second sampling member connection terminal 63, where the first sampling member connection terminal 62 and the second sampling member connection terminal 63 are connected to the sampling portion 61. The circuit board 5 includes a circuit board body 51, a first circuit board connection terminal 521, and a second circuit board connection terminal 522, where the first circuit board connection terminal 521 and the second circuit board connection terminal 522 are connected to the circuit board body 51. The electrical connector 7 is the foregoing electrical connector 7 in this disclosure. The first sampling member connection terminal 62 is electrically connected to the first connection end 73A of the first electrical connection portion 73. The second sampling member connection terminal 63 is electrically connected to the third connection end 74A of the second electrical connection portion 74. The first circuit board connection terminal 521 is electrically connected to the second connection end 73B of the first electrical connection portion 73. The second circuit board connection terminal 522 is electrically connected to the fourth connection end 74B of the second electrical connection portion 74.

The sampling assembly according to this embodiment of this disclosure uses the foregoing electrical connector 7. The electrical connector 7 is provided with the separation portion 75, helping to reduce the risk of the connection between the first electrical connection portion 73 and the second electrical connection portion 74 due to the condensed water. When corresponding sampling connection portions of the sampling portion and circuit board of the sampling assembly are connected through the electrical connector 7, it helps to improve the sampling performance of the sampling assembly.

In the sampling assembly according to some embodiments, the first sampling member connection terminal 62, the second sampling member connection terminal 63, the first circuit board connection terminal 521, and the second circuit board connection terminal 522 each include a plug pin. The first connection end 73A, the second connection end 73B, the third connection end 74A, and the fourth connection end 74B each are a plug-fitting end or press-fitting end connected to a corresponding plug pin.

Each connection end being the plug-fitting end or press-fitting end connected to the plug pin is conducive to rapid connection and disassembly of the electrical connector 7 and the sampling portion and sampling connection portion connected to the electrical connector 7, which is conducive to assembly and maintenance of the electrical connector 7 and the sampling assembly.

In the sampling assembly according to some embodiments, the separation portion 75 includes a first end 75A and a second end 75B opposite each other. The first connection end 73A of the first electrical connection portion 73 is closer to the first end 75A of the separation portion 75 than the second connection end 73B, and the second connection end 73B of the first electrical connection portion 73 is closer to the second end 75B of the separation portion 75 than the first connection end 73A. The third connection end 74A of the second electrical connection portion 74 is closer to the first end 75A of the separation portion 75 than the fourth connection end 74B. The fourth connection end 74B of the second electrical connection portion 74 is closer to the second end 75B of the separation portion 75 than the third connection end 74A. A distance between the first connection end 73A and the second end 75B is smaller than a distance between the third connection end 74A and the second end 75B, and a distance between the second connection end 73B and the first end 75A is smaller than a distance between the fourth connection end 74B and the first end 75A. A distance between an end surface of a plug-fitting end of a plug pin of the first sampling member connection terminal 62 and the sampling portion 61 is smaller than a distance between an end surface of a plug-fitting end of a plug pin of the second sampling member connection terminal 63 and the sampling portion 61. A distance between an end surface of a plug-fitting end of a plug pin of the first circuit board connection terminal 521 and the circuit board body 51 is greater than a distance between an end surface of a plug-fitting end of a plug pin of the second circuit board connection terminal 522 and the circuit board body 51.

The above arrangement helps to form a staggered arrangement of the connection end of the first electrical connection portion 73 and the connection end of the second electrical connection portion 74 which are disposed at a same end of the housing, thereby helping to increase a distance between the connection ends, close to a same end, of the first electrical connection portion 73 and the second electrical connection portion 74. With the provision of the separation portion 75, it can further lengthen a flow path of the condensed water, better preventing the connection between the first electrical connection portion 73 and the second electrical connection portion 74 due to the condensed water. Plug-fitting ends of plug pins of the corresponding sampling connection portions of the sampling portion and circuit board are adapted to the first electrical connection portion 73 and the second electrical connection portion 74, helping to improve the sampling performance of the sampling assembly.

In the sampling assembly according to some embodiments, the first electrical connection portion 73 and the second electrical connection portion 74 each include a slot 731 and two press-fitting portions 732 disposed at two ends of the slot 731 in an extension direction, where the slot 731 includes an accommodating groove 731A used for accommodating a connection terminal, the press-fitting portion 732 is connected to an opening side of the accommodating groove 731A in a corresponding end portion of the slot 731 in the extension direction and includes a press-in channel 732A communicating with an opening of the accommodating groove 731A, and a minimum passing size of the press-in channel 732A is smaller than an opening size of the accommodating groove 731A on a cross section perpendicular to the extension direction of the slot 731. The plug pins respectively include body sections 621, 631, 5211, and 5221 and fitting sections 622, 632, 5212, and 5222. Each of the fitting sections 622, 632, 5212, and 5222 fits with a corresponding accommodating groove (for example, the accommodating groove 731A) and the press-fitting portion (for example, the press-fitting portion 732), and the body sections 621, 631, 5211, and 5221 are connected to the corresponding fitting sections 622, 632, 5212, and 5222 and the sampling portion 61 or the circuit board body 51.

The above structural arrangement of the first electrical connection portion 73, the second electrical connection portion 74, and the plug pin facilitates rapid and stable connection between the connection end and the plug pin and prevents the plug pin from disengaging from the connection end through the press-in channel 732A.

In the sampling assembly according to some embodiments, the plug pins further include anti-disengagement portions 623 and 633, where the anti-disengagement portions 623 and 633 are disposed on the corresponding fitting sections 622 and 632 and are apart from the body sections 621 and 631, and the press-fitting portion 732 is located between the corresponding body sections 621 and 631 and the anti-disengagement portions 622 and 632.

The provision of the anti-disengagement portion helps the plug pin to disengage from the connection end along the extension direction of the accommodating groove 731A.

A battery according to an embodiment of this disclosure includes a battery cell and the sampling assembly according to the foregoing embodiments of this disclosure. The sampling assembly is configured to acquire parameters of the battery cell.

The battery according to this embodiment of this disclosure has the advantages of the sampling assembly according to the foregoing embodiments of this disclosure, helping to improve the sampling performance of the battery, thereby facilitating safety management of the battery by a battery management system.

An electric device according to an embodiment of this disclosure includes the battery according to the foregoing embodiment of this disclosure, where the battery is configured to supply power to the electric device.

The electric device according to this embodiment of this disclosure has the advantages of the battery according to the foregoing embodiment of this disclosure, helping to improve the sampling performance of the battery, thereby facilitating safety management of the battery by a battery management system.

The following describes some embodiments of this disclosure with reference to FIGs. 1 to 11.

As shown in FIG. 1, in an embodiment of this disclosure, the electric device is a vehicle D. The vehicle D includes a battery configured to supply power to the vehicle D. The battery can supply power to the vehicle D in starting, lighting, and/or walking.

As shown in FIG. 2, in some embodiments of this disclosure, a battery B includes a battery module 1. The battery module 1 includes a plurality of battery cells electrically connected to a connection piece 4. The battery B further includes a sampling assembly, where the sampling assembly includes a circuit board 5, a sampling portion 6, and an electrical connector 7 for connecting the circuit board 5 and the sampling portion 6. A plurality of connection pieces 4 and the sampling assembly are both disposed on a wiring harness board 3. The circuit board 5 is in signal connection with a battery management system 9 through a connector 8. The battery may include a casing and a cover, where the battery module 1 and the sampling assembly are disposed in the casing to form a battery pack.

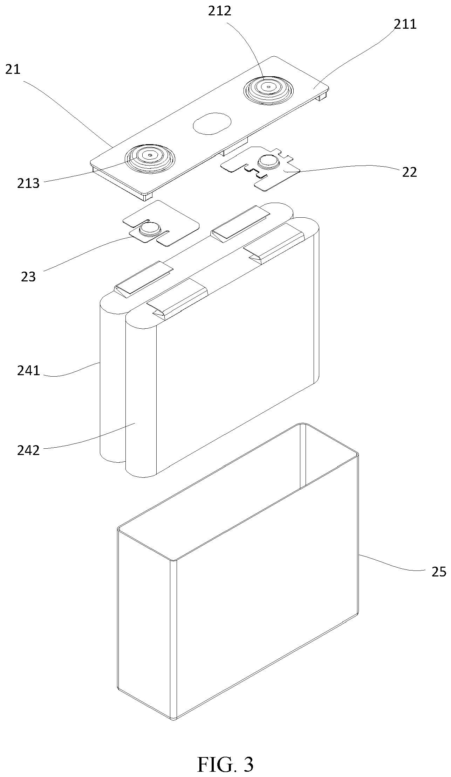

As shown in FIG. 3, in some embodiments of this disclosure, the battery cell of the battery includes two cell assemblies 241 and 242, an enclosure 25, and an end cover assembly 21, where the cell assemblies 241 and 242 are packaged in the enclosure 25 through an end cover 211 of the end cover assembly 21. The end cover 211 is provided with two electrode terminals 212 and 213. The electrode terminals 212 and 213 may be electrically connected to the cell assemblies 241 and 242 through adapting pieces 22 and 23 for outputting or inputting electrical energy of the battery cell.

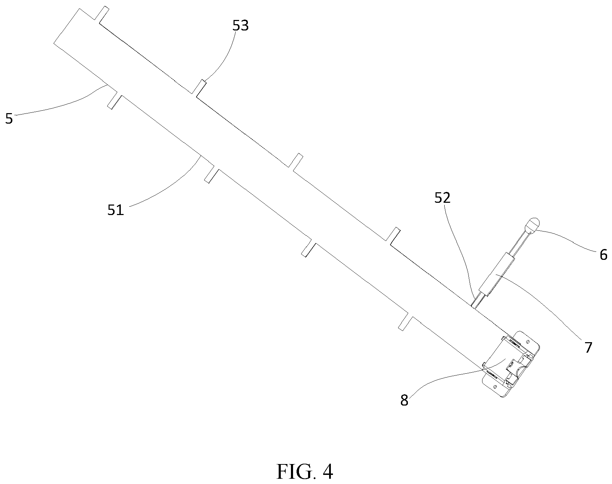

As shown in FIG. 4, the circuit board 5 of the sampling assembly includes a circuit board body 51 and a plurality of sampling connection portions, where the plurality of sampling connection portions include a sampling connection portion 52 electrically connected to the sampling portion 6 and may further include another sampling connection portion connected to another sampling portion, for example, a pressure sensor. For example, the plurality of sampling connection portions may include a sampling connection portion 53.

In the embodiments of this disclosure, it is only described in detail that the sampling portion 6 and the sampling connection portion 52 are connected through an electrical connector 7. The sampling portion 6 is a temperature sensor for measuring the temperature of the battery cell.

As shown in FIG. 2 and FIGs. 4 to 11, an electrical connector 7 provided in an embodiment of this disclosure includes a housing, a first electrical connection portion 73, a second electrical connection portion 74, and a separation portion 75. The housing includes a housing body 71 and a cover 72 that fit together. The first electrical connection portion 73, the second electrical connection portion 74, and the separation portion 75 are all located in the housing.

The first electrical connection portion 73 includes a first connection end 73A and a second connection end 73B electrically connected to the first connection end 73A. The second electrical connection portion 74 includes a third connection end 74A and a fourth connection end 74B electrically connected to the third connection end 74A. The separation portion 75 is configured to block water droplets, is located between the first electrical connection portion 73 and the second electrical connection portion 74, and is configured to reduce the risk of connection between the first electrical connection portion 73 and the second electrical connection portion 74 due to condensed water.

The housing includes the housing body 71 and the cover 72. The housing body 71 includes a bottom wall 711 and a side wall 712 disposed on the periphery of the bottom wall 711. The housing is made of an insulating and waterproof material. The separation portion is made of an insulating and waterproof material.

The first electrical connection portion 73 and the second electrical connection portion 74 are disposed on the bottom wall 711 of the housing body 71. The cover 72 covers the housing body 71 and is detachably connected to the housing body 71 through a snap-fitting structure.

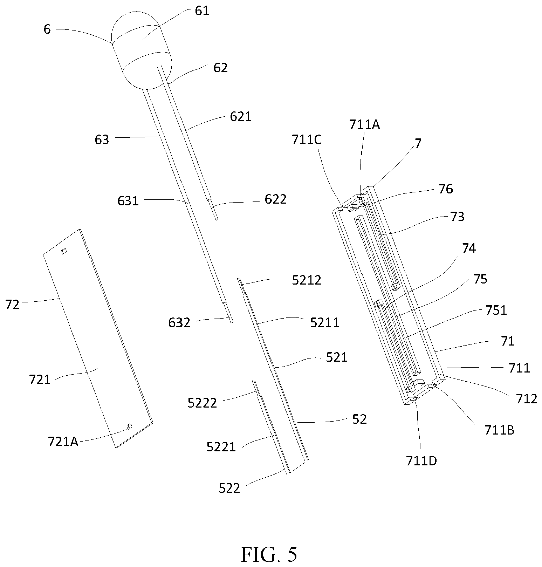

As shown in FIGs. 5 to 11, the first electrical connection portion 73, the second electrical connection portion 74, and the separation portion 75 all extend along a length direction of the housing. The first electrical connection portion 73, the second electrical connection portion 74, and the separation portion 75 are spaced apart in parallel. The first electrical connection portion 73 and the second electrical connection portion 74 form a staggered arrangement as a whole. As shown in FIGs. 5 to 7, the separation portion 75 of the electrical connector 7 includes a first end 75Aand a second end 75B opposite each other. The first connection end 73A of the first electrical connection portion 73 is closer to the first end 75A of the separation portion 75 than the second connection end 73B, and the second connection end 73B of the first electrical connection portion 73 is closer to the second end 75B of the separation portion 75 than the first connection end 73A. The third connection end 74A of the second electrical connection portion 74 is closer to the first end 75A of the separation portion 75 than the fourth connection end 74B, and the fourth connection end 74B of the second electrical connection portion 74 is closer to the second end 75B of the separation portion 75 than the third connection end 74A. A distance between the first connection end 73A and the second end 75B is smaller than a distance between the third connection end 74A and the second end 75B, and a distance between the second connection end 73B and the first end 75A is smaller than a distance between the fourth connection end 74B and the first end 75A.

The separation portion 75 is divided into two parts that are respectively arranged on the housing body 71 and the cover 72. A joint between the separation portion 75 and the housing body 71 and a joint between the separation portion 75 and the cover 72 are both hermetically connected. In this embodiment, the part of the separation portion 75 disposed on the housing body 71 is integrated with the housing body 71, and the part of the separation portion 75 disposed on the cover 72 is integrated with the cover 72.

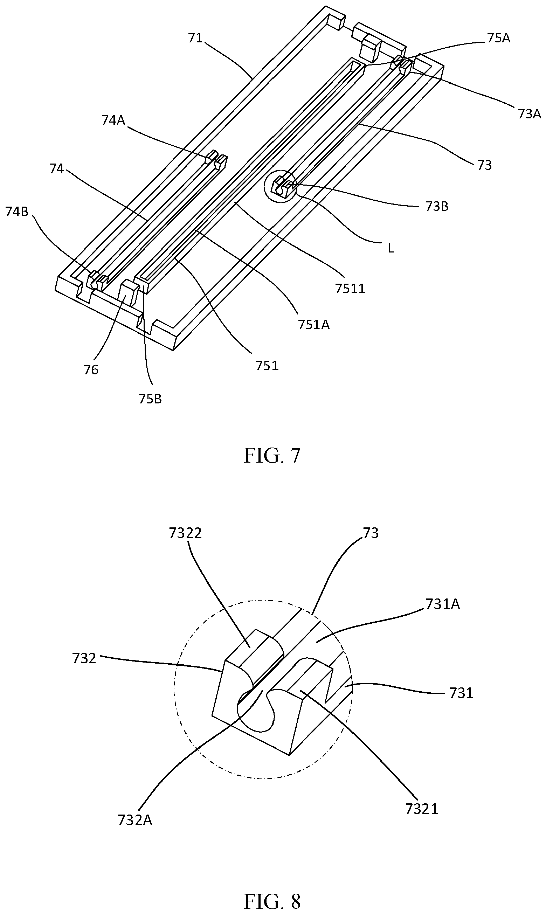

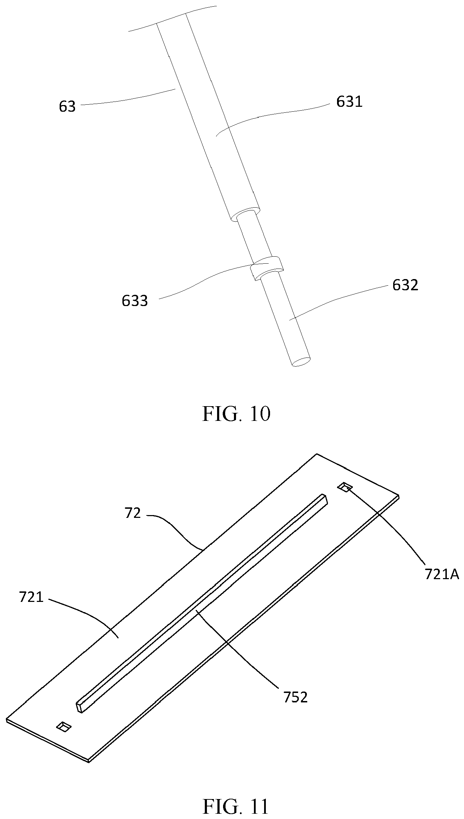

As shown in FIGs. 4 to 6 and FIG. 11, the separation portion 75 includes a first separation bar 751 and a second separation bar 752. The first separation bar 751 is integrally disposed on the bottom wall 711 of the housing body 71. The second separation bar 752 is integrally disposed on a cover plate 721 of the cover 72. An end portion of the second separation bar 752 facing the first separation bar 751 is in convex-concave fit with an end portion of the first separation bar 751 facing the second separation bar 752. As shown in FIG. 7, a body 7511 of the first separation bar 751 is a groove-shaped structure provided with a mounting groove 751A. As shown in FIG. 11, an end of the second separation bar 752 away from the cover 72 is adapted to the mounting groove 751A in size. When the cover 72 is snap-fitted to the housing body 71, a side of the second separation bar 752 facing the housing body 71 is inserted into the mounting groove 751A, such that the first separation bar 752 and the second separation bar 751 are hermetically connected. The above arrangement allows the separation portion 75 to be hermetically connected to the bottom wall 711 of the housing body 71 and the cover 72.

As shown in FIGs. 5 to 7, to allow terminals of the sampling portion 6 and the sampling connection portion 52 to enter the housing of the electrical connector 7, a side wall of the housing body 71 is provided with through holes 711A, 711B, 711C, and 711D for connection terminals to pass through, where the connection terminals are respectively electrically connected to the first connection end 73A, the second connection end 73B, the third connection end 74A, and the fourth connection end 74B.

The first connection end 73A, the second connection end 73B, the third connection end 74A, and the fourth connection end 74B each are a press-fitting end connected to a plug pin. To achieve press-fitting of the plug pin and the press-fitting end, the through holes 711A, 711B, 711C, and 711D each are a groove provided on the side wall 712 of the housing body 71, where an opening of the groove is provided on an end away from the bottom wall 711. This allows the cover 72 to cover the housing body 71 after the sampling portion 6 and the sampling connection portion 52 are connected to the first connection end 73A, the second connection end 73B, the third connection end 74A, and the fourth connection end 74B. Such arrangement can reduce an operation space required for combining the sampling portion 6, the sampling connection portion 52, and the electrical connector 7.

As shown in FIGs. 5 to 7, the first connection end 73A, the second connection end 73B, and the third connection end 74A and fourth connection end 74B of the second electrical connection portion 74 are apart from the side wall 712 of the housing body 71. For the first end 75A and second end 75 B, opposite each other, of the separation portion 75, a spacing is present between the first end 75A and the side wall 712, and a spacing is present between the second end 75B and the side wall 712.

The snap-fitting structure connecting the housing body 71 to the cover 72 includes a first snap-fitting portion and a second snap-fitting portion. The first snap-fitting portion is a snap-fitting opening 721A provided on the cover plate 721 of the cover 72. The second snap-fitting portion is a hook 76 disposed on the bottom wall 711 of the housing body 71, is located in the spacing, and fits with the snap-fitting opening 721A.

As shown in FIGs. 5 to 11, the first electrical connection portion 73 includes a slot 731 and a press-fitting portion 732. The slot 731 includes an accommodating groove 731A used for accommodating a connection terminal. The press-fitting portion 732 is connected to an opening side of the accommodating groove 731A in an end portion of the slot 731 in an extension direction and includes a press-in channel 732A communicating with an opening of the accommodating groove 731A, where a minimum passing size of the press-in channel 732A is smaller than an opening size of the accommodating groove 731A on a cross section perpendicular to the extension direction of the slot 731. The size of the press-in channel 732A gradually decreases to the minimum passing size and then gradually increases in a direction from a side away from the accommodating groove 731A to a side close to the accommodating groove 731A on the cross section perpendicular to the extension direction of the slot 731. The press-fitting portion 732 includes a first press-fitting head 7321 and a second press-fitting head 7322. The press-in channel 732A is formed between the first press-fitting head 7321 and the second press-fitting head 7322.

The first connection end 73A and second connection end 73B of the first electrical connection portion 73 each are provided with a press-fitting portion, so that the first connection end 73A and the second connection end 73B each form a press-fitting end.

A structure of the second electrical connection portion 74 is the same as a structure of the first electrical connection portion 73 and may refer to the structure of the first electrical connection portion.

As shown in FIGs. 5, 6, 9, and 10, the sampling member 6 includes a sampling portion 61, a first sampling member connection terminal 62, and a second sampling member connection terminal 63, where the first sampling member connection terminal 62 and the second sampling member connection terminal 63 are connected to the sampling portion 61.

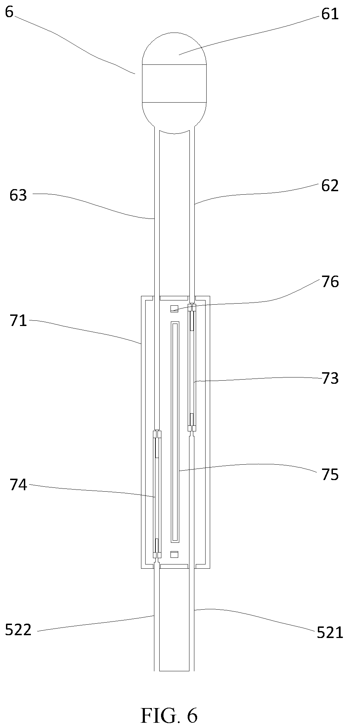

As shown in FIGs. 5 and 6, the circuit board 5 includes a circuit board body 51 and a sampling connection portion 52 connected to the circuit board body 51. The sampling connection portion 52 includes a first circuit board connection terminal 521 and a second circuit board connection terminal 522. The first sampling member connection terminal 62 is electrically connected to the first connection end 73A of the first electrical connection portion 73. The second sampling member connection terminal 63 is electrically connected to the third connection end 74A of the second electrical connection portion 74. The first circuit board connection terminal 521 is electrically connected to the second connection end 73B of the first electrical connection portion 73. The second circuit board connection terminal 522 is electrically connected to the fourth connection end 74B of the second electrical connection portion 74.

The first sampling member connection terminal 62, the second sampling member connection terminal 63, the first circuit board connection terminal 521, and the second circuit board connection terminal 522 each include a plug pin. The first connection end 73A, the second connection end 73B, the third connection end 74A, and the fourth connection end 74B each are a press-fitting end connected to a corresponding plug pin.

To adapt to a circumstance in which the first electrical connection portion 73 and the second electrical connection portion 74 are staggered, a distance between an end surface of a plug-fitting end of a plug pin of the first sampling member connection terminal 62 and the sampling portion 61 is smaller than a distance between an end surface of a plug-fitting end of a plug pin of the second sampling member connection terminal 63 and the sampling portion 61. A distance between an end surface of a plug-fitting end of a plug pin of the first circuit board connection terminal 521 and the circuit board body 51 is greater than a distance between an end surface of a plug-fitting end of a plug pin of the second circuit board connection terminal 522 and the circuit board body 51.

The plug pins of the first sampling member connection terminal 62, the second sampling member connection terminal 63, the first circuit board connection terminal 521, and the second circuit board connection terminal 522 respectively include body sections 621, 631, 5211, and 5221 and fitting sections 622, 632, 5212, and 5222. Each of the fitting sections 622, 632, 5212, and 5222 fits with a corresponding accommodating groove such as the accommodating groove 731A and the press-fitting portion such as the press-fitting portion 732. The body sections 621, 631, 5211, and 5221 are connected to the corresponding fitting sections 622, 632, 5212, and 5222 and the sampling portion 61 or the circuit board body 51.

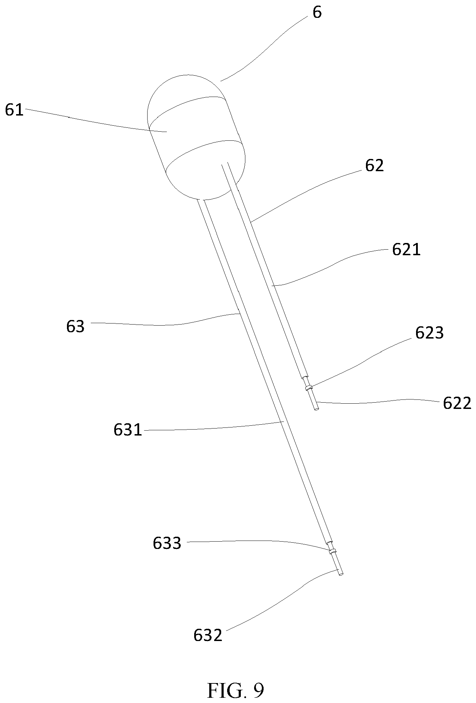

As shown in FIGs. 9 and 10, in some embodiments, the plug pins of the first sampling member connection terminal 62, the second sampling member connection terminal 63, the first circuit board connection terminal 521, and the second circuit board connection terminal 522 each further include an anti-disengagement portion. For example, the first sampling member connection terminal 62 is provided with an anti-disengagement portion 623, and the second sampling member connection terminal 63 is provided with an anti-disengagement portion 633. The anti-disengagement portion is disposed on a corresponding fitting section, for example, the anti-disengagement portion 623 is disposed on the fitting section 622, and the anti-disengagement portion 633 is disposed on the fitting section 632. In addition, the anti-disengagement portion is apart from a corresponding body section, for example, the anti-disengagement portion 623 is apart from the body section 621, and the anti-disengagement portion 633 is apart from the body section 631. The press-fitting portion is located between the corresponding body section and the anti-disengagement portion.

As shown in FIGs. 9 and 10, the anti-disengagement portion may be, for example, a convex ring disposed on the fitting section or a plurality of protrusions provided along a circumferential direction of the fitting section.

In the electrical connector 7 according to the embodiments of this disclosure, the housing body 71 and various parts on the housing body 71 as well as the cover 72 and various parts on the cover 72 each are an injection molded part, and wiring terminals are also embedded in corresponding injection molded parts. This is conducive to processing and assembly, better achieving insulating and waterproof performance of the electrical connector itself, and enhancing separation of adjacent wiring terminals.

According to the foregoing descriptions, the electrical connector and sampling assembly according to the embodiments of this disclosure help to prevent short circuit between the adjacent wiring terminals of the electrical connector due to the condensed water in the high-temperature and high-humidity environment. Signals acquired by the temperature sensor as the sampling portion 6 are transmitted to a BMS board through the electrical connector 7, the circuit board 5, and the connector 8, implementing easy disassembly and water resistance while achieving a temperature sampling function.

In conclusion, it should be noted that the foregoing embodiments are merely intended for describing the technical solutions of this disclosure but not for limiting this disclosure. Although this disclosure is described in detail with reference to the preferred embodiments, persons of ordinary skill in the art should understand that they may still make modifications to the specific embodiments of this disclosure or make equivalent replacements to some technical features thereof. All such modifications and equivalent replacements shall fall within the scope of the technical solutions claimed in this disclosure.

## Claims

1. An electrical connector (7), comprising:
a housing;
a first electrical connection portion (73) located in the housing and comprising a first connection end (73A) and a second connection end (73B) electrically connected to the first connection end (73A);
a second electrical connection portion (74) located in the housing and comprising a third connection end (74A) and a fourth connection end (74B) electrically connected to the third connection end (74A); and
a separation portion (75) configured to block water droplets and located in the housing and between the first electrical connection portion (73) and the second electrical connection portion (74).

2. The electrical connector (7) according to claim 1, wherein
the separation portion (75) comprises a first end (75A) and a second end (75B) opposite each other;
the first connection end (73A) of the first electrical connection portion (73) is closer to the first end (75A) of the separation portion (75) than the second connection end (73B), and the second connection end (73B) of the first electrical connection portion (73) is closer to the second end (75B) of the separation portion (75) than the first connection end (73A);
the third connection end (74A) of the second electrical connection portion (74) is closer to the first end (75A) of the separation portion (75) than the fourth connection end (74B), and the fourth connection end (74B) of the second electrical connection portion (74) is closer to the second end (75B) of the separation portion (75) than the third connection end (74A); and
a distance between the first connection end (73A) and the second end (75B) is smaller than a distance between the third connection end (74A) and the second end (75B), and a distance between the second connection end (73B) and the first end (75A) is smaller than a distance between the fourth connection end (74B) and the first end (75A).

3. The electrical connector (7) according to claim 1 or 2, wherein the first electrical connection portion (73), the second electrical connection portion (74), and the separation portion (75) all extend along a length direction of the housing.

4. The electrical connector (7) according to any one of claims 1 to 3, wherein the first electrical connection portion (73), the second electrical connection portion (74), and the separation portion (75) are spaced apart in parallel.

5. The electrical connector (7) according to any one of claims 1 to 4, wherein the first connection end (73A), the second connection end (73B), the third connection end (74A), and the fourth connection end (74B) each are a plug-fitting end or press-fitting end connected to a plug pin.

6. The electrical connector (7) according to any one of claims 1 to 5, wherein the housing comprises:
a housing body (71), wherein the first electrical connection portion (73) and the second electrical connection portion (74) are disposed on the housing body (71); and
a cover (72) covering the housing body (71) and detachably connected to the housing body (71), wherein the separation portion (75) is disposed on at least one of the housing body (71) and the cover (72).

7. The electrical connector (7) according to claim 6, wherein the separation portion (75) comprises:
a first separation bar (751) disposed on one of the housing body (71) and the cover (72); and
a second separation bar (752) disposed on the other of the housing body (71) and the cover (72), wherein an end portion of the second separation bar (752) facing the first separation bar (751) is in convex-concave fit with an end portion of the first separation bar (751) facing the second separation bar (752).

8. The electrical connector (7) according to claim 6 or 7, wherein the housing body (71) is connected to the cover (72) through a snap-fitting structure.

9. The electrical connector (7) according to any one of claims 6 to 8, wherein the housing body (71) and/or the cover (72) is provided with through holes (711A, 711B, 711C, 711D) for connection terminals to pass through, wherein the connection terminals are respectively electrically connected to the first connection end (73A), the second connection end (73B), the third connection end (74A), and the fourth connection end (74B).

10. The electrical connector (7) according to any one of claims 6 to 9, wherein the housing body (71) comprises a bottom wall (711) and a side wall (712) disposed on the periphery of the bottom wall (711), the first electrical connection portion (73) and the second electrical connection portion (74) are both disposed on the bottom wall (711), and the first connection end (73A), the second connection end (73B), the third connection end (74A), and the fourth connection end (74B) are apart from the side wall (712) of the housing body (71).

11. The electrical connector (7) according to any one of claims 6 to 10, wherein the housing body (71) comprises a bottom wall (711) and a side wall (712) disposed on the periphery of the bottom wall (711), and the separation portion (75) is hermetically connected to the bottom wall (711) of the housing body (71) and the cover (72).

12. The electrical connector (7) according to claim 11, wherein the separation portion (75) comprises a first end (75A) and a second end (75B) opposite each other, wherein a spacing is present between the first end (75A) and the side wall (712), and a spacing is present between the second end (75B) and the side wall (712).

13. The electrical connector (7) according to claim 12, wherein the housing body (71) is connected to the cover (72) through a snap-fitting structure, wherein the snap-fitting structure comprises:
a first snap-fitting portion disposed on the cover (72); and
a second snap-fitting portion disposed on the bottom wall (711) of the housing body (71) and located in the spacing.

14. The electrical connector (7) according to any one of claims 1 to 13, wherein the first electrical connection portion (73) or the second electrical connection portion (74) comprises:
a slot (731) comprising an accommodating groove (731A) used for accommodating a connection terminal; and
a press-fitting portion (732) connected to an opening side of the accommodating groove (731A) in an end portion of the slot (731) in an extension direction and comprising a press-in channel (732A) communicating with an opening of the accommodating groove (731A), wherein a minimum passing size of the press-in channel (732A) is smaller than an opening size of the accommodating groove (731A) on a cross section perpendicular to the extension direction of the slot (731).

15. The electrical connector (7) according to claim 14, wherein the size of the press-in channel (732A) gradually decreases to the minimum passing size and then gradually increases in a direction from a side away from the accommodating groove (731A) to a side close to the accommodating groove (731A) on the cross section perpendicular to the extension direction of the slot (731).

16. The electrical connector (7) according to any one of claims 1 to 15, wherein
the housing is made of an insulating and waterproof material; and/or
the separation portion is made of an insulating and waterproof material.

17. A sampling assembly, comprising:
a sampling member (6) comprising a sampling portion (61), a first sampling member connection terminal (62), and a second sampling member connection terminal (63), wherein the first sampling member connection terminal (62) and the second sampling member connection terminal (63) are connected to the sampling portion (61);
a circuit board (5) comprising a circuit board body (51), a first circuit board connection terminal (521), and a second circuit board connection terminal (522), wherein the first circuit board connection terminal (521) and the second circuit board connection terminal (522) are connected to the circuit board body (51); and
an electrical connector (7) being the electrical connector (7) according to any one of claims 1 to 16; wherein the first sampling member connection terminal (62) is electrically connected to the first connection end (73A) of the first electrical connection portion (73), the second sampling member connection terminal (63) is electrically connected to the third connection end (74A) of the second electrical connection portion (74), the first circuit board connection terminal (521) is electrically connected to the second connection end (73B) of the first electrical connection portion (73), and the second circuit board connection terminal (522) is electrically connected to the fourth connection end (74B) of the second electrical connection portion (74).

18. The sampling assembly according to claim 17, wherein
the first sampling member connection terminal (62), the second sampling member connection terminal (63), the first circuit board connection terminal (521), and the second circuit board connection terminal (522) each comprise a plug pin; and
the first connection end (73A), the second connection end (73B), the third connection end (74A), and the fourth connection end (74B) each are a plug-fitting end or press-fitting end connected to a corresponding plug pin.

19. The sampling assembly according to claim 18, wherein
the separation portion (75) comprises a first end (75A) and a second end (75B) opposite each other; the first connection end (73A) of the first electrical connection portion (73) is closer to the first end (75A) of the separation portion (75) than the second connection end (73B), and the second connection end (73B) of the first electrical connection portion (73) is closer to the second end (75B) of the separation portion (75) than the first connection end (73A); the third connection end (74A) of the second electrical connection portion (74) is closer to the first end (75A) of the separation portion (75) than the fourth connection end (74B), and the fourth connection end (74B) of the second electrical connection portion (74) is closer to the second end (75B) of the separation portion (75) than the third connection end (74A); and a distance between the first connection end (73A) and the second end (75B) is smaller than a distance between the third connection end (74A) and the second end (75B), and a distance between the second connection end (73B) and the first end (75A) is smaller than a distance between the fourth connection end (74B) and the first end (75A); and
a distance between an end surface of a plug-fitting end of a plug pin of the first sampling member connection terminal (62) and the sampling portion (61) is smaller than a distance between an end surface of a plug-fitting end of a plug pin of the second sampling member connection terminal (63) and the sampling portion (61); and a distance between an end surface of a plug-fitting end of a plug pin of the first circuit board connection terminal (521) and the circuit board body (51) is greater than a distance between an end surface of a plug-fitting end of a plug pin of the second circuit board connection terminal (522) and the circuit board body (51).

20. The sampling assembly according to claim 18 or 19, wherein
the first electrical connection portion (73) and the second electrical connection portion (74) each comprise a slot (731) and two press-fitting portions (732) disposed at two ends of the slot (731) in an extension direction, wherein the slot (731) comprises an accommodating groove (731A) used for accommodating a connection terminal, the press-fitting portion (732) is connected to an opening side of the accommodating groove (731A) in a corresponding end portion of the slot (731) in the extension direction and comprises a press-in channel (732A) communicating with an opening of the accommodating groove (731A), and a minimum passing size of the press-in channel (732A) is smaller than an opening size of the accommodating groove (731A) on a cross section perpendicular to the extension direction of the slot (731); and
each of the plug pins comprises a body section (621, 631, 5211, 5221) and a fitting section (622, 632, 5212, 5222), wherein each fitting section (622, 632, 5212, 5222) fits with the corresponding accommodating groove (731A) and the press-fitting portion (732), and the body section (621, 631, 5211, 5221) is connected to the corresponding fitting section (622, 632, 5212, 5222) and the sampling portion (61) or the circuit board body (51).

21. The sampling assembly according to claim 20, wherein each of the plug pins further comprises an anti-disengagement portion (623, 633), the anti-disengagement portion (623, 633) is disposed on the corresponding fitting section (622, 632) and is apart from the body section (621, 631), and the press-fitting portion (732) is located between the corresponding body section (621, 631) and the anti-disengagement portion (622, 632).

22. A battery, comprising a battery cell and the sampling assembly according to any one of claims 17 to 21, wherein the sampling assembly is configured to acquire parameters of the battery cell.

23. An electric device, comprising the battery according to claim 22, wherein the battery is configured to supply power to the electric device.
